# EUROPEAN PATENT APPLICATION

(11) **EP 1 717 294 A1**
(43) Date of publication of application: **02.11.2006**
(21) Application number: 05719095.1
(22) Date of filing: 14.02.2005
(51) Int. Cl.: C10J 3/00, B09B 3/00, C10B 53/00, C10B 53/02

(54) **BIOMASS GASIFICATION SYSTEM AND OPERATING METHOD THEREOF**

(30) Priority: 20.02.2004 JP 2004045514
(71) Applicant: Chugai Ro Co., Ltd., Osaka-shi, Osaka 550-0003 (JP)
(72) Inventor: FUKUSHIMA, Masahiro, c/o CHUGAI RO CO., LTD., Osaka-shi, Osaka 5500003 (JP); SASAUCHI, Kenichi, c/o CHUGAI RO CO., LTD., Osaka-shi, Osaka 5500003 (JP)
(74) Representative: Oser, Andreas
(86) International application number: PCT/JP2005/002148
(87) International publication number: WO 2005/080533

(57) **Abstract**

**Purpose**

To provide a biomass gasification system and operating method capable of maintaining an effective seal between the respective internal environments of a gasification furnace and thermal source, and of providing a stable supply of slag from the gasification furnace to the thermal source through a slag feed system.

**Means**

A biomass gasification system, which generates fuel gas from the thermal treatment of biomass in a gasification furnace 2 thermally powered by a thermal airflow generator 1, incorporates a slag feed system 3 which supplies slag S generated in the gasification furnace to the thermal airflow generator for use as combustible fuel therein. A vertical hopper 4 is installed to the slag feed system for accumulating the slag in order to provide a sealing function which separates and seals the respective internal environments of the gasification furnace and thermal airflow generator. A detective means is provided in the form of electrodes 9, 10 and 11 which are used to monitor the amount of slag in the vertical hopper by contacting the slag to establish conductivity in the electrode circuit.

## Description

### Technical Field

The invention relates to a biomass gasification system and operating method thereof wherein a seal is formed to mutually separate and isolate the internal environments of a gasification furnace and thermal source, and a stable supply of a slag from the gasification furnace to the thermal source is obtained through a slag feed system.

### Related Art

A known biomass gasification system generates fuel gas through a process by which wood chips or poultry manure is thermally cracked in a non-oxidizing environment of a gasification furnace at temperatures from 600°C to 900°C. This system gasifies the combustible organic component of the biomass within a temperature range of from 200°C to 600°C. The fuel gas thus obtained is sent to an electrical generator powered by a combustion engine, gas engine, fuel cell, or other like fuel gas utilization device. This type of biomass-based electrical generating system has been looked upon with increasing interest during recent years.

The applicant has submitted a Japanese patent application (No. 2003-155658) for a biomass gasification system in which biomass is processed through the application of thermal energy from a thermal source in order to generate a fuel gas. This system includes a slag supply system which feeds slag generated by the gasification furnace to the thermal source for use as a heat-generating fuel therein. Specifically, the slag supply system incorporates an extraction feeder connected with a slag extraction part of the gasification furnace and an insertion feeder provided between the extraction feeder and a slag insertion part of a thermal airflow generator as a thermal source. The former extracts the residual carbide (slag) generated by the gasification furnace in the biomass thermal treatment process, and the latter supplies the slag from the extraction feeder to the thermal airflow generator for use as such fuel therein. The slag supply system is thus able to sequentially feed the slag generated in the gasification furnace to the thermal airflow generator.

### Disclosure of the Invention

### Shortcomings Resolved by the Invention

Combustible fuel gas is generated within the internal environment of the gasification furnace, and exhaust gas, which includes combusted high temperature air for heating the gasification furnace, is generated in the internal environment of the thermal airflow generator. It is important that the respective internal environments of the gasification furnace and thermal airflow generator are mutually sealed off from one another. Therefore, a sealing mechanism must be provided in the slag supply system connecting the gasification furnace and thermal airflow generator in order to separate the respective environments. This sealing mechanism has taken the form of a damper or other like mechanical sealing device capable of appropriately opening and closing passages in the slag supply system so as to ensure both of seal and supply.

There are problems, however, in that slag tends to build up and bridge across the passages of the slag supply system at locations where the mechanical seals have been installed, and in that the components of the sealing mechanism tend to deform as a result of the heat of the high-temperature slag. This is a phenomenon which adversely affects the reliable operation of the sealing mechanism.

In response to the aforesaid shortcomings in the prior art, the inventor has construed a biomass gasification system and operating method thereof wherein the internal environments of the gasification furnace and thermal source are mutually sealed off from one another, and wherein a slag feed system provides a stable supply of slag from the gasification furnace to the thermal source.

### Means of Overcoming Shortcomings in the Related Art

The present biomass gasification system invention applies thermal energy from a thermal source in order to generate fuel gas from biomass in a gasification furnace, and incorporates a slag feed system capable of supplying slag generated in the gasification furnace to the thermal source for use as a heat-generating fuel therein, and further incorporates a slag holding part in which the slag accumulates.

Moreover, the slag which has accumulated in the holding part forms a seal between the internal environments of the gasification furnace and thermal source.

A detective means is provided to monitor the amount of slag in the holding part.

The detective means is structured in the form of at least two electrodes which come into contact with the slag to form a conductive circuit.

Transport means is provided between the holding part and thermal source in order to transport slag from the holding part to the thermal source when the amount of slag, as monitored by the detective means, exceeds the amount required to form an environmental seal between the gasification furnace and thermal source.

A biomass gasification system operating method invention applies thermal energy from a thermal source to a gasification furnace in which the thermal energy is used to generate fuel gas from biomass, and provides means of feeding slag generated in the gasification furnace to the thermal source for use as a heat-generating fuel therein. The operating method includes a step that the slag accumulating in the holding part installed to the slag feed system forms a seal which mutually isolates and separates the internal environments of the gasification furnace and thermal source.

The slag is transported from the holding part to the thermal source when the amount of slag in the holding part exceeds that required to maintain a seal between the internal environments of the gasification furnace and thermal source.

### Effect of the Invention

The biomass gasification system and operating method invention appropriately seals and separates the internal environments of the gasification furnace and thermal source, and is able to provide a stable supply of slag from the gasification furnace to the thermal source through the slag feed system.

### Preferred Embodiments of the Invention

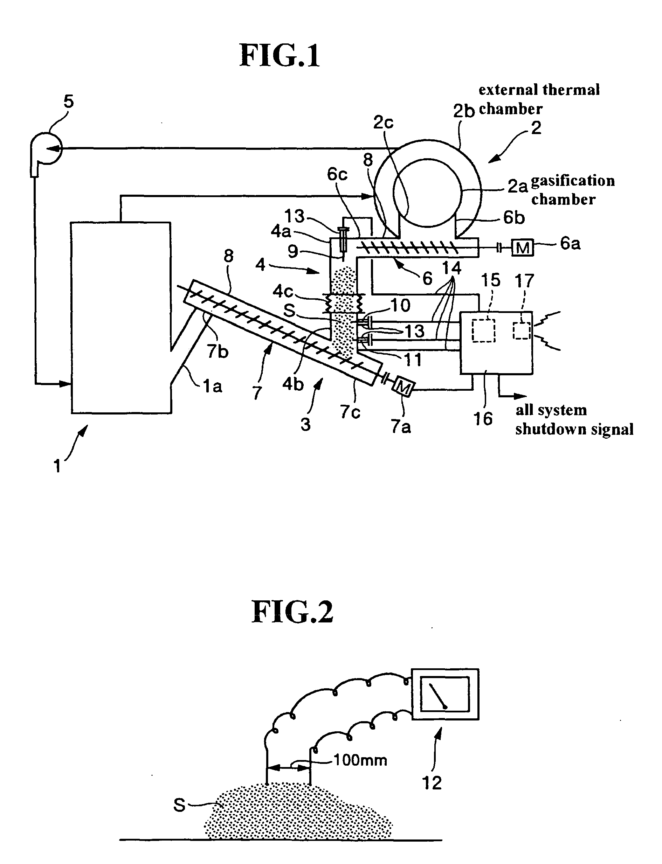

The following provides a detailed description of an embodiment of the biomass gasification system and operating method thereof invention with reference to the attached drawings. The biomass gasification system invention, as described in this embodiment and illustrated in Fig. 1, includes a slag feed system 3 which supplies slag S to a thermal source, in this case thermal airflow generator 1, for use as a heat-generating fuel therein, said slag S having been generated as a residual component of the process where the thermal airflow from the thermal airflow generator 1 is applied to wood chips or other biomass material to be cracked into a fuel gas. The slag feed system 3 also includes a vertical hopper 4 as a holding part in which slag S accumulates.

The gasification furnace 2 is a dual-chamber structure comprising a gasification chamber 2a into which biomass is placed and subjected to a heating process in order to generate fuel gas, and an external thermal chamber 2b formed around the periphery of gasification chamber 2a as means of applying energy thereto for executing the heat process. Thermal airflow generator 1 operates by combusting a fossil fuel or slag S which is supplied from the gasification furnace 2 in order to generate a thermal airflow of exhaust gas containing high temperature air. The thermal airflow generated by the thermal airflow generator 1 heats the gasification chamber 2a of the gasification furnace 2 by flowing through the external thermal chamber 2b from where it is blown back to the thermal airflow generator 1 by a thermal circulation fan 5. A slag discharge part 2c is installed to the gasification chamber 2a of the gasification furnace 2 as means of discharging slag S which is carbide generated by the biomass thermal cracking process. Slag insertion part 1a is provided with the thermal airflow generator 1 to supply slag S thereto.

The slag feed system 3, which is installed between slag discharge part 2c of the gasification furnace 2 and slag insertion part 1a of the thermal airflow generator 1, transports slag S from the gasification furnace 2 to the thermal airflow generator 1 at a temperature above 350°C. The slag supply system 3 includes extraction means in the form of an extraction screw feeder 6 powered by motor 6a, and transport means in the form of an insertion screw feeder 7 powered by motor 7a. The feeders 6 and 7 are enclosed within a hermetically sealed cover 8. The extraction screw feeder 6 is approximately horizontally disposed, and includes a collector end 6b connected to slag discharge part 2c of the gasification furnace 2 and an export end 6c to which the discharged slag S from the gasification furnace 2 is sent by feed operation. The insertion screw feeder 7 is in inclined disposition with its upper discharge end 7b connected to slag insertion part 1a of the thermal airflow generator 1, and its lower receiver end 7c disposed beneath the export end 6c of the extraction screw feeder 6. The insertion screw feeder 7 transports slag S, which has been supplied by the extraction screw feeder 6 to the receiver end 7c, to the thermal airflow generator 1.

In order to transfer slag S from the extraction screw feeder 6 to the insertion screw feeder 7, a vertical hopper 4 is installed in the vertical space between ends 6c and 7c of feeders 6 and 7, the top end of the vertical hopper 4 being connected to the export end 6c of extraction screw feeder 6, and the bottom end thereof connected to the receiver end 7c of the insertion screw feeder 7. Therefore, slag S from the extraction screw feeder 6 enters the top end of the vertical hopper 4 from where it falls downward to the lower part thereof, and is discharged by the insertion screw feeder 7 from the bottom end of the vertical hopper 4. Slag S accumulates within the vertical hopper 4 to a volume adjusted by the operation of insertion screw feeder 7 in relation to the amount fed in by the extraction screw feeder 6. By maintaining a substantial amount of slag S in the vertical hopper 4, more specifically, by allowing slag S to accumulate to a substantial height within the vertical hopper 4, it becomes possible to use slag S to separate and seal feeder 6 from feeder 7, and thus separate the environment within the gasification furnace 2 from that within the thermal airflow generator 1.

To be more specific, vertical hopper 4 is separated into upper hopper 4a and lower hopper 4b which are connected by a metal bellows duct 4c which is able to thermally expand and contract. The upper and lower hoppers 4a and 4b are made from an electrically conductive metal such as stainless steel.

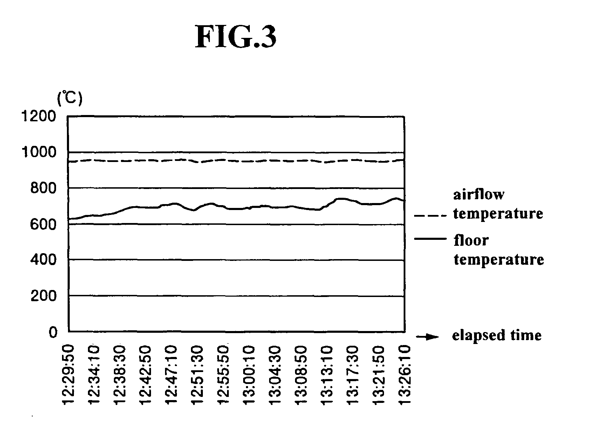

Detection means, in the form of electrically conductive electrodes 9, 10 and 11, are installed to the vertical hopper 4 and are contact with slag S therein in order to monitor the slag volume, that is to say the height of slag S, accumulated within the vertical hopper 4. Slag S is a particulate substance which may have a particle diameter ranging from 1 to 10mm. If the biomass raw material consists of wood chips, elemental analysis of the resulting slag S reveals, as shown in Table 1, that 88% of the composition is electrically conductive carbide. As shown in Fig. 2, an electrical circuit tester 12 reveals that such slag S has approximately 5,000 Ohms of resistance when measured over a 100mm span, thus indicating a substantial amount of electrical conductivity.

[Table 1]

**Table 1: Carbide slag from wood chips**

| | Unit of measurement | Combusted Sample | |
|---|---|---|---|
| | | wood chips | Carbide |
| Sodium | % | 0.036 | 0.031 |
| potassium | % | 0.15 | 0.87 |
| all chlorines | % | 0.39 | 0.39 |
| Carbon | % | 46 | 88 |
| Hydrogen | % | 6.1 | less than 0.1 |
| Nitrogen | % | 0.2 | 0.2 |
| combustible sulphur | % | 0.19 | 0.05 |
| gross caloric value | MJ/kg | 19.2 | 31.5 |
| water component | % | 64 | 2.5 |
| volatile component | % | 83.5 | 4.5 |
| ash component | % | 0.3 | 2.7 |
| Oxygen | % | 46 | 9.2 |
| combustible component | % | 35 | 94 |
| solid oxygen | % | 16.2 | 92.8 |
| all sulphurs | % | 0.22 | 0.07 |
| combustible chlorine | % | less than 0.01 | 0.04 |

Electrodes 9, 10 and 11, which are made of stainless steel, are disposed to penetrate the walls of the vertical hopper 4, and are electrically insulated from the hopper walls by encapsulation within insulators 13. Three electrodes 9, 10 and 11 are illustrated and used in this embodiment. The first electrode 9 is installed at the top end of the vertical hopper 4, the second electrode 10 is installed to the vertical hopper 4 below the bellows duct 4c at a height establishing the volume of slag S required to form an effective seal, and the third electrode 11 is installed below the second electrode 10 and above the receiver end 7c of the insertion screw feeder 7 at a height which establishes the minimum volume of slag S required to form the seal. A wire lead 14 is attached to each electrode 9, 10 and 11, and also to lower hopper 4b.

Each wire lead 14 is connected with power source 15 such as DC power source and energized by a small current supplied therefrom. Therefore, a complete conductive circuit may be formed, through the presence of slag S, between each electrode 9, 10 and 11 and the lower hopper 4b, separately. The power source 15 is connected to a control unit 16 which is able to monitor an electrically conductive state or insulated state between each electrode 9, 10 and 11, and lower hopper 4b. For example, the third electrode 11 is utilized as follows. When the volume of slag S has accumulated to a point above the third electrode 11, electrical conductivity is established by the presence of slag S between the third electrode 11 and the lower hopper 4b. Conversely, when slag S has not accumulated up to the third electrode 11, electrical conductivity is not established. Therefore, control unit 16 is able to provide a control function based on the monitored conductive and insulated states of the circuit. An increasing volume of slag S accumulating in vertical hopper 4 results in slag S coming into respective contact with the second and first electrodes 10 and 9, thus completing the circuits and establishing a state of conductivity which is monitored by the control unit 16 as means of detecting the volume of slag S which has accumulated in the vertical hopper 4.

The control unit 16, which is connected to the motor 7a of insertion screw feeder 7, outputs "start" and "stop" signals and speed control signal to control motor 7a, based on the height of slag S in the vertical hopper 4 as monitored through electrodes 9, 10 and 11. For example, to explain the operation in case of the second electrode 10, in a case where the height of slag S rises above the second electrode 10, which is installed at a position which establishes a slag height adequate to provide a effective sealing function, a state of conductivity is detected between the second electrode 10 and the lower hopper 4b through slag S. The control unit 16 responds to this condition by activating the insertion screw feeder 7 in order to feed slag S to the thermal airflow generator 1. Conversely, if slag S has not accumulated to a point reaching the second electrode 10, the insulated state of the circuit is monitored and results in the control unit 16 terminating operation of the insertion screw feeder 7. The control unit 16 is also able to output a signal which shuts down the entire system, and is equipped with a warning device 17 which is activated to notify that the entire system has stopped.

The following will describe the biomass gasification system operating method. When the biomass gasification system is operating, the gasification furnace 2 generates fuel gas from biomass through a heating process driven by the thermal airflow generator 1, and in the process continually generates slag S. Slag S exits slag discharge part 2c of gasification chamber 2a and is transported into the vertical hopper 4 by extraction screw feeder 6. The slag S in the vertical hopper 4 is transported to slag insertion part 1a of the thermal airflow generator 1 by the insertion screw feeder 7. Slag S is then combusted within the thermal airflow generator 1 which generates a thermal airflow supplied to the external thermal chamber 2b of the gasification furnace 2 where the thermal airflow is used to the heat process for gasifying biomass.

While the biomass gasification system is operating, the height of accumulated slag S in the vertical hopper 4 is monitored by detection means in the form of electrodes 9, 10 and 11. A small amount of electrical current is applied by the electrical power source 15 to the wire leads 14 connected to the electrodes 9, 10 and 11 and the lower hopper 4b. The control unit 16 is able to recognize a conductive or insulated state between each electrode 9, 10 and 11 and the lower hopper 4b, the conductive or insulated state being determined by the accumulated slag S respectively contacting or not contacting the electrodes 9, 10 and 11.

When the third electrode 11 is in a insulated state (with the first and second electrodes 9 and 10 also in a insulated state), the control unit 16 activates the warning device 17 and concurrently outputs an "all stop" control signal which shuts down the entire system, including the insertion screw feeder 7.

Conversely, when the first electrode 9 is in a conductive state (with the second and third electrodes 10 and 11 in an conductive state), the control unit 16 outputs a control signal to the motor 7a which drives the insertion screw feeder 7 at a high speed due to the large volume of slag S in the vertical hopper 4, since there is accumulated a large amount of slag S therein. Afterwards, the first electrode 9 will assume an insulated state (with second and third electrodes 10 and 11 in an conductive state) which results the control unit 16 outputting a control signal to the motor 7a to drive the insertion screw feeder 7 at a slow speed.

Furthermore, when the insertion screw feeder 7 is running at a slow speed with the second electrode10 in a insulated state (and the third electrode 11 in a conductive state), the control unit 16 will output a "stop" signal to the motor 7a in order to terminate operation of the insertion screw feeder 7 as means of preventing the height of the accumulated slag S from reaching the third electrode 11 which establishes the minimum allowable slag height. When the second electrode 10 returns to a conductive state (with the third electrode 11 also in a conductive state), the control unit 16 will output a signal to the motor 7a to re-start the insertion screw feeder 7 at a low speed to resume the transport of slag S to the thermal airflow generator 1.

This operating method automatically controls the operation of the insertion screw feeder 7 in relation to the height of the accumulated slag S in the vertical hopper 4, thus suppressing changes in the volume of slag supplied to the thermal airflow generator 1, eliminating external effects that make it difficult to control the temperature of the thermal airflow generator 1, and making use of slag S as a sealing material. With the practical operation of this operating method, Fig.3 shows fluctuations of "the airflow temperature" and "the floor temperature" of the thermal airflow generator 1. It was determined that the fluctuation of insertion amount of slag S to the thermal airflow generator 1 results in little effect on the temperature of the thermal airflow, although there are slight variations in the floor temperature.

The biomass gasification system and operating method thereof, as described in this embodiment, utilizes a holding part, in the form of the vertical hopper 4, which is installed to slag feed system 3. The accumulation of slag S in the vertical hopper 4 provides a sealing function able to mutually separate and isolate the internal environments of the gasification furnace 2 and thermal airflow generator 1. Compared to a mechanical sealing structure wherein slag S forms a bridge across the installation region of such sealing structure, and wherein thermal distortion of the mechanical sealing structure adversely affects its operation, the utilization of only accumulated slag S in the vertical hopper 4 to seal off the internal environment of the gasification furnace 2 from that of the thermal airflow generator 1 eliminates the need for a mechanical sealing component. An extremely simple and extremely reliable sealing structure is thus obtained. In respect to the method wherein slag S is supplied to the thermal airflow generator 1 from the gasification furnace 2, the slug feed operation through which the slag feed system 3 allows slag S to temporarily accumulate within the vertical hopper 4 while concurrently supplying slag to the thermal airflow generator 1 proceeds in a highly stable manner without any adverse affects on the effectiveness of the seal formed by slag S.

The pressures within the gasification furnace 2 and thermal airflow generator 1 are separately controlled to a pressure differential within 200Pa. For example, if the specific gravity of slag S is 0.113 and slag S has been accumulated within the vertical hopper 4 to a height of 354mm, the sealing function may be maintained up to a pressure differential of 400Pa.

Conversely, if the volume of slag S generated in the gasification furnace 2 fluctuates due to gasification conditions, that is, if the slag S is not generated at a uniform rate, even though the insertion screw feeder 7 is running at a uniform speed, the volume of slag S transported to the vertical hopper 4 by the extraction screw feeder 6 will not be constant and the amount of slag S within the vertical hopper 4 may change. As a result, even though the gasification furnace 2 and thermal airflow generator 1 are sealed off from each other by the accumulation of slag S in the vertical hopper 4, if the fluctuating volume of slag S in the vertical hopper 4 is not known, it becomes difficult to maintain the required sealing level and to establish a stable rate of slag supply from the gasification furnace 2 to the thermal airflow generator 1. In other words, too little slag S in the vertical hopper 4 will negate the sealing function, and the accumulation of too much slag S in the vertical hopper 4, that is, a condition in which the vertical hopper 4 is full of slag S, will have an adverse effect on the operation of the extraction screw feeder 6.

This embodiment specifies detective means in order to detect the volume of slag S within the vertical hopper 4, therefore making it possible to accurately comprehend the amount of slag S accumulated therein. Knowing the height of slag S in the vertical hopper 4 enables automatic or manual control of the slag feed system 3 in order to maintain the volume of slag S at a required height which provides the sealing function, and to enable an appropriate supply of slag S from the gasification furnace 2 to the thermal airflow generator 1.

The detection value provided by the detective means is applied to enable automatic operation of the biomass gasification system, particularly the automatic operation of the insertion screw feeder 7. In this embodiment, the control unit 16 utilizes the conductive or insulated states of the electrodes 9, 10 and 11 to automatically control operation of the insertion screw feeder 7 through the motor 7a in order to maintain a level of slag S in the vertical hopper 4 sufficient to provide the required sealing function, and to appropriately control the supply of slag S to the thermal airflow generator 1.

In other words, in this embodiment, the switching point at which the operation of the insertion screw feeder 7 starts or stops is based on the amount of slag S in the vertical hopper 4. The point in time at which the level of slag S rises above the second electrode 10 is monitored, that is, the point in time is detected at which the second electrode 10 assumes a conductive state indicating that the required environmental seal has been established. This operation thus enables the supply of slag S from the vertical hopper 4 to the thermal airflow generator 1 to be executed in a manner which an appropriate supply of slag S is maintained under assuring an adequate sealing function.

Moreover, the detective means, which is structured from the conductive electrodes 9, 10 and 11 which penetrate the wall of vertical hopper 4, and from the lower hopper 4b which also functions as an electrode, utilizes the conductivity of slag S. Therefore, the amount of slag S within the vertical hopper 4 may be externally grasped even with the temperature of the slag S being in excess of 350°C. Furthermore, the detective means operates with a high level of reliability due to its simple structure comprising only the electrodes 9, 10 and 11, even though they are installed to the vertical hopper 4 in which slag S is cast.

Moreover, the installation of electrodes 9, 10 and 11 at points of three levels within the vertical hopper 4 enable the detection of three different slag heights through which operation of the insertion screw feeder 7 is controlled. Thus, an extremely fine level of control may be established.

Specifically, at the point in time at which the height of the accumulated slag S falls below the second electrode 10 (electrode 10 being located above the third electrode 11 which is disposed at a height establishing the minimum amount of slag S required to maintain the sealing effect), the operation of the insertion screw feeder 7 is terminated, thus assuring that the height of the slag S is kept at a level which maintains the effective sealing effect.

While the preceding description of the embodiment refers to the holding part structured in the form of the vertical hopper 4, the holding part may also be structured as a horizontal hopper, when the extraction screw feeder 6 as a push-in type feeder which pushes slag horizontally into the hopper is used and the amount of slag S is detected along the length of the horizontal hopper. Of course, a slant hopper may be used. Moreover, the power source 15 may be installed to each electrode 9, 10 and 11.

### Brief Description of the Drawings

Fig.1 is a schematic diagram of a preferred embodiment of the biomass gasification system invention.
Fig. 2 is a drawing describing how the electrical conductivity of slag is measured.
Fig. 3 is a graph illustrating the relationship between the airflow temperature and floor temperature of the thermal airflow generator during operation of the biomass gasification system.

## Claims

1. A biomass gasification system in which thermal energy from a thermal source is applied to a gasification furnace as means of generating fuel gas therein, and in which a slag feed system is incorporated as means of supplying slag generated in said gasification furnace to said thermal source for use as a heat-generating fuel therein comprising:
a slag holding part being installed to said slag feed system and accumulating the slag.

2. A biomass gasification system according to claim 1, wherein the slag which has accumulated in said holding part forms a seal between the internal environments of said gasification furnace and said thermal source.

3. A biomass gasification system according to claim 1 or 2, wherein a detective means is provided in order to monitor an amount of slag in said holding part.

4. A biomass gasification system according to claim 3, wherein said detective means is structured as at least a pair of electrodes which come into contact with the slag to form an electrically conductive circuit.

5. A biomass gasification system according to claim 3 or 4, wherein transport means is installed between said holding part and said thermal source in order to transport slag from said holding part to said thermal source when the amount of slag, as monitored by said detective means, exceeds the amount required to form a seal between the internal environments of said gasification furnace and said thermal source.

6. A biomass gasification system operating method applied to a biomass gasification system in which thermal energy from a thermal source is applied to a gasification furnace as means of generating fuel gas therein, and in which a slag feed system is incorporated as means of supplying slag generated in said gasification furnace to said thermal source for use as a heat-generating fuel therein, comprising:
a step that the slag accumulating in a holding part installed to said slag feed system forms a seal between the internal environments of said gasification furnace and said thermal source.

7. A biomass gasification system operating method according to claim 6, wherein the slag is transported from said holding part to said thermal source when the amount of slag in said holding part exceeds that required to maintain a seal between the internal environments of said gasification furnace and said thermal source.
